# EUROPEAN PATENT APPLICATION

(11) **EP 2 854 332 A1**
(43) Date of publication of application: **01.04.2015**
(21) Application number: 13306336.2
(22) Date of filing: 27.09.2013
(51) Int. Cl.: H04L 9/32, G06Q 20/40, H04L 9/16, G06Q 20/32

(54) **Method for securing over-the-air communication between a mobile application and a gateway**

(71) Applicant: Gemalto SA, 92190 Meudon (FR)
(72) Inventor: Venot, Claire, 92190 MEUDON (FR); Desjardins, Jean-Michel, 92190 MEUDON (FR)
(74) Representative: Lotaut, Yacine Diaw

(57) **Abstract**

The present invention generally relates to systems and methods for performing issuer updates of data stored in a mobile device, a remote authentication, a remote payment transaction or enable the configuration of mobile application functions or operations. More specifically, the present invention relates to a method and system for securing an issuer updates processing for mobile payment application. When an update transaction is initiated, the payment application increments an Application Transaction Counter ATC and derives from this ATC a session keys. Sensitive user credential data are encrypted with the computed session keys before transmission to a gateway which is configured to compute the session keys for decryption. The decrypted user credential data are forwarded to a payment application issuer for updates.

## Description

### TECHNICAL FIELD

The present invention generally relates to systems and methods for securing over the air communication between a mobile application and a gateway.

Particularly, the present invention relates to a system and method for securing the transaction messages transiting between a mobile application in a mobile device and a gateway over an unsecure OTA network.

More specifically, the present invention relates to a method and system for securing an issuer updates processing for mobile payment application to enable the configuration of payment device functions or operations.

### BACKGROUND ART

Well known payment cards are used by millions of people worldwide to facilitate various types of commercial transactions. In a typical transaction involving the purchase of a product or service at a merchant location, the payment card is presented at a point of sale terminal ("POS terminal") located at a merchant's place of business. The POS terminal may be a card reader or similar device that is capable of accessing data stored on the payment card, where this data includes identification and authentication data. Data read from the payment card is provided to the merchant's transaction processing system and then to the acquirer, which is typically a bank or other institution that manages the merchant's account.

If the payment is performed using contact-based chip technology (cards following the EMV standard) and the transaction is authorized in real time ("online") by the issuing institution, the issuer or its data processor may also take advantage of the authorization response message to send update data back to the payment card application. Such update data may include scripts for updating application parameters, transaction counters, or a balance associated with the payment card.

Another means of payment has appeared in recent years. Indeed, users now have the capability to make payments using their mobile device such as their mobile phone. However, if a mobile device is used as a payment device, the mobile device cannot be inserted into a point-of-sale terminal to conduct a contact point-of-sale transaction and to receive issuer updates.

For example, in the case of a transaction that uses short-range contactless technology (Near Field Communication), a contactless device reader or point of sale terminal is typically expected to be in communication with the contactless mobile device for only a short period of time; for example, enough time for it to be recognized and authenticated by the reader and to provide data needed to initiate the transaction. Indeed, unlike for contact chip (EMV) transactions, the contactless mobile device remains in the hands of the user during the portion of the transaction when the mobile device is presented to the contactless for communication. For the sake of user convenience, this communication window is thus generally expected to be less than half a second.

However, this means that the mobile device and the contactless reader are not in communication long enough for an issuer to perform an update to cause a command or function to be executed on the mobile device, such as for resetting a counter, configuring a function of the payment application or mobile device, etc. When the authorization response message reaches the contactless POS, the mobile device is already out of reach. Thus, there is a need for an alternate issuer update channel for mobile payment devices. The intrinsic connectivity of such devices enables to use easily over-the-air (OTA) channels like Wifi and/or data connection provided by the Mobile Network Operator in the case of a smart phone.

During said update processing, to allow the issuer to be able to authenticate the payment application, sensitive customer credentials, for example PAN and/or Track2 Equivalent data, need to be transferred as part of the OTA authorization request message. However, the disclosure of such credentials may be used by fraudsters for card-not-present transactions.

The physical OTA communication channel between the mobile device and the gateway receiving the incoming OTA authorization message from the mobile device does not always provide sufficient encryption mechanisms - if any. Besides, the entity on the phone that prepares the authorization request (e.g. the Graphical User Interface) may not be considered as trusted either.

There is also an additional need to protect, during the update processing, the integrity and origin of information sent from the mobile payment application through the mobile device to the issuer via the gateway.

### SUMMARY OF THE INVENTION

The present invention addresses the aforementioned security drawbacks of the OTA channel - vs. traditional and secured POS-to-issuer transaction route. The present invention relates to a system, apparatus and method for securing the transaction messages transiting between a mobile payment application in a mobile device and a gateway, over an unsecure OTA network. It is further assumed that the gateway can route these transaction messages to the issuer of the mobile payment application, through a secure channel and protocol that is outside of scope of the present invention.

These secured OTA transaction messages can typically be used by an issuer to provide to the mobile payment application of the mobile device comprising a contactless element an update process, completely independently from the payment gesture at a POS - which would require that the user maintains communication between the mobile device and a device reader for an extended period of time, or that the user presents the mobile device again. The secured OTA transaction messages may however not be limited to remote over-the-air issuer updates: it may apply to other use cases, like remote user authentication, remote payment, etc...

When an issuer of the payment application needs to configure (or reconfigure) a function, operation, or setting of said payment application that is installed on the mobile device, such as a mobile device that includes a contactless element, a "dummy" (administrative) transaction is engaged. This "dummy" (administrative) transaction is engaged on the mobile device with the payment application, generating the contents of an authorisation request which is transmitted to the issuer's authorization server via the gateway (e.g. Trusted Service Manager).

The present invention proposes a method for securing the sensitive contents of the authorization request transferred between the payment application and the gateway. The sensitive contents can be user credentials. For that, the present invention proposes a method for encrypting sensitive user credentials between the mobile payment and the gateway. Besides, the present invention proposes method of verifying of origin/integrity by the gateway on the contents of the authorization request.

Aspects of the embodiments of the present invention relate in general to a method of generating an encryption session key and an integrity session key. These session keys can be generated according to the following steps:
- first and second gateway master keys GMK are shared between the gateway server and a key management system,
- the key management system generates a unique application identifier Al (which can be a PAN alias), this application identifier is personalized in the payment application,
- the key management system derives two unique keys the gateway encryption key KENC and the gateway integrity key KMAC from the application identifier Al and respectively from the first and second gateway master key GMK; these two unique keys are personalized in the payment application as well.

When the update processing is initiated, the payment application increases an Application Transaction Counter (ATC) and derives two session keys: an encryption session key ENC, and an integrity session key MAC. The derivation of these session keys is based on a derivation vector being the current ATC and respectively the gateway encryption key KENC and the gateway integrity key KMAC.

The payment application provides the well-known "chip data" for the administrative authorisation request (Application Cryptogram, as well as input data used for its generation). Besides, it also returns:
- the application identifier Al,
- the ATC value,
- the user sensitive data such as the PAN and/or the Track2 Equivalent Data, which is enciphered using the encryption session key ENC,
- the MAC is generated using the integrity session key over at least one part of the contents of the authorization request.

When receiving the issuer update request, the gateway:
- calculates the ENC and MAC session keys using the incoming application identifier, the first and second gateway master key and the received ATC value,
- verifies the MAC value for the message
- decrypts the PAN or Track2 Equivalent Data
- transmits the chip data + decrypted PAN/Track2 Equivalent Data to the issuer Host, using a dedicated secured network outside of scope of this invention.

The invention relies on a one-way authentication (only the payment application authenticates to the gateway). With the way proposed to generate session keys it is not needed to perform a mutual authentication between the payment application and the gateway.

Such systems and methods of the present invention improve the security of information transferred from a mobile communication device by providing efficient means for secure communication.

To achieve those and other advantages, and in accordance with the purpose of the invention as embodied and broadly described, the invention proposes a method for securing transaction messages transiting between a mobile application in a mobile device and an issuer across a gateway wherein when a transaction is initiated:
- incrementing a transaction counter,
- deriving a session encryption key ENC from the current transaction counter and a gateway encryption key KENC, said gateway encryption key being derived from a first master gateway key,
- encrypting sensitive data with the session encryption key ENC,
- elaborating a transaction request message comprising the encrypted sensitive data, the current transaction counter, and an application identifier of the mobile application,
- sending the transaction request message from the mobile application through the mobile device to the gateway, the gateway being configured to retrieve the session encryption key, and
- decrypting the received encrypted data with the computed session encryption key ENC,
- forwarding from the gateway the transaction request message comprising the decrypted sensitive data, through a secure network, to the issuer for processing.

In other various methods, a session integrity key MAC is derived from the current transaction counter and a gateway integrity key KMAC, said gateway integrity key being derived from a second master gateway key. A MAC signature value is generated from the session integrity key MAC and at least one part of the contents of the transaction request message. This MAC value is added to the transaction request message before its transmission to the gateway. The gateway is configured to computes the session integrity key and to verify the MAC signature value of the received transaction request message.

Therefore, the integrity and origin of information sent from the mobile payment application through the gateway are protected with the present invention.

In other various methods, the gateway encryption key KENC and the gateway integrity key KMAC are derived according to the following steps:
- generation of the first and second master gateway keys,
- deriving the gateway encryption key KENC from the generated application identifier, the first master key and a first derivation algorithm,
- deriving the gateway integrity key KMAC from said generated application identifier, the second master key and a second derivation algorithm,
- loading into the mobile application the generated application identifier, the derived gateway encryption key KENC and the derived gateway integrity key KMAC.

In other various methods, the mobile application is stored into a secure element of the mobile device during, for instance, a personalization phase.

In other various methods, the session keys are retrieved by the gateway according to the following steps:
- deriving the gateway encryption key KENC and the gateway integrity key KMAC from the application identifier and respectively from a stored first and second master gateway key and the first and second derivation algorithm,
- deriving the session encryption key ENC and the session integrity key MAC from the current transaction counter and respectively from the derived gateway encryption key KENC and the derived gateway integrity key KMAC.

In other various methods, the first and the second derivation algorithm can be the same or the first and the second master gateway key can be the same.

An advantage of these features is that only the mobile application is authenticated and the ways to compute or retrieve the session keys are simple and easy to implement.

In other various methods, the mobile application is a mobile payment application. In this case the transaction request message corresponds to the authorization request message and can comprise the application identifier, the current Application Transaction Counter ATC, the sensitive data comprising the contents of the magnetic-stripe data track(s), fully or partially (track 1, track 2, track 3), and dynamic and static data enabling the issuer to authenticate the mobile payment application.

The method of the present invention has many technological advantages, among them: minimize the number of OTA messages exchanged between the payment application and the gateway, simplicity of generating the session keys, and a strong protection of the sensitive data transmitted.

In other various methods, the transaction is initiated by a user of the mobile device, by the mobile device itself, or by the issuer by sending a push message to the mobile device. This transaction initiated can be an over-the-air issuer update which can comprise updating parameters for the mobile payment application, blocking a payment application on the mobile device, unblocking the mobile payment application, unblocking a PIN on the mobile payment application, and/or changing the PIN on the mobile payment application.

The present invention also relates to a system comprising a mobile application stored into a mobile device, said mobile application being configured to communicate with an issuer via the mobile communication device across a gateway, wherein transaction messages transiting during this communication between the mobile application and the gateway are secured according to the method of the present invention.

### BRIEF DESCRIPTION OF THE DRAWINGS

The following detailed description will be better understood with the drawings, in which:
FIG. 1 illustrates the different entities involved in an updating process of a payment application installed on a user device.
FIG. 2 is a logic flow diagram in accordance with an exemplary embodiment of this invention during a setup phase of key generation.
FIG. 3 is a transaction flow diagram in accordance with an exemplary embodiment of this invention during a processing update phase.

### DETAILED DESCRIPTION OF THE EMBODIMENTS OF THE INVENTION

The present invention is not specific to any particular hardware or software implementation, and is at a conceptual level above specifics of implementation. It is to be understood that various other embodiments and variations of the invention may be produced without departing from the spirit or scope of the invention. The following is provided to assist in understanding the practical implementation of particular embodiments of the invention.

The same elements have been designated with the same referenced numerals in the different drawings. For clarity, only those elements and steps which are useful to the understanding of the present invention have been shown in the drawings and will be described.

Further, the mechanisms of data communication between the parties and their environment have not been detailed either, the present invention being here again compatible with usual mechanisms.

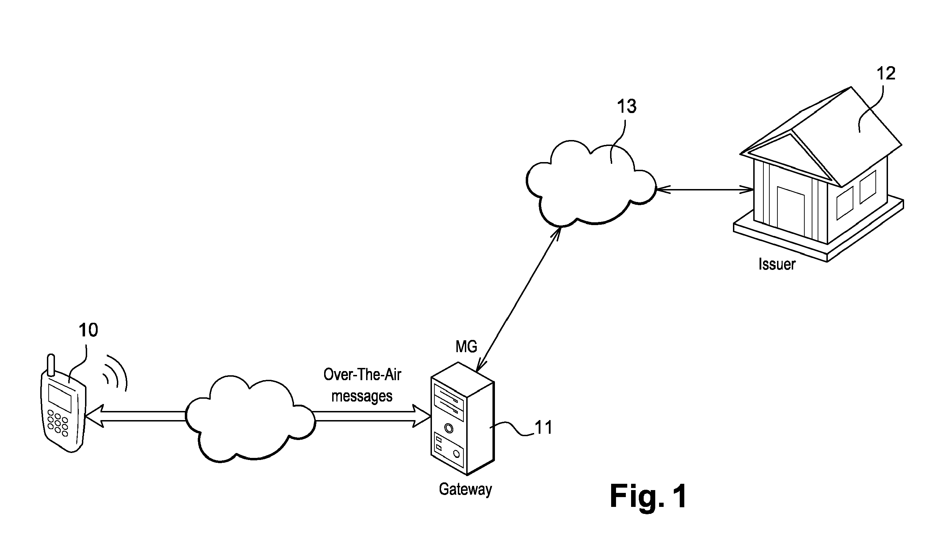

Furthermore, the connecting lines shown in the various figures contained herein are intended to represent exemplary functional relationships and/or physical couplings between the various elements. It should be noted that many alternatives or additional functional relationships or physical connections may be present in a practical system. Furthermore, the various entities in FIG. 1 may communicate via any suitable communication medium (including the Internet), using any suitable communication protocol.

Moreover, when an action is said to be performed by a terminal, it is in fact executed by a microprocessor in this terminal controlled by instruction codes recorded in a program memory on said terminal. An action is also ascribed to an application or software. This means that part of the instruction codes making up the application or software are executed by the microprocessor.

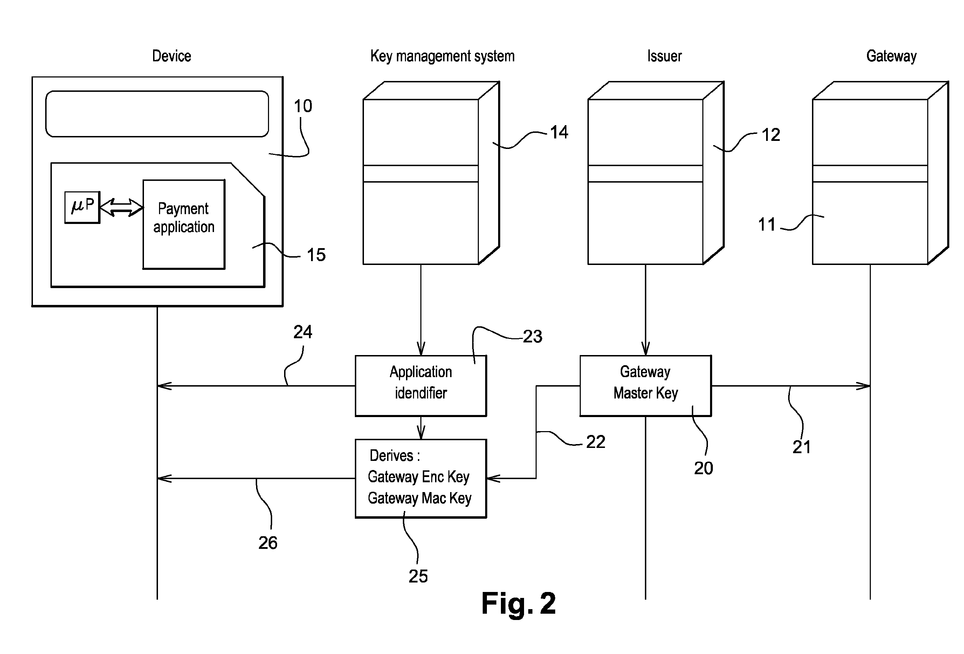

In the embodiments illustrated in FIG. 1 and FIG. 2, the transaction initiated is an over-the-air issuer update of a mobile payment application. The present invention can be also relevant for a transaction which is a remote authentication of the mobile communication device by the issuer or a remote payment transaction through the mobile communication device, this list is of course not exhaustive.

FIG. 1 shows entities involved in a flow diagram for managing mobile payment applications 16 on a mobile communication device 10. For simplicity of discussion, only one of each entity is shown at FIG.1. It is understood, however, that embodiments of the technology may include more than one of each entity. Additionally, some embodiments of the technology may include fewer than all of the entities shown in FIG. 1. FIG. 1 depicts an example of the system in which a gateway 11 and an issuer 12 are implemented

The mobile device 10 may comprise a secure element 15, near-field communications hardware and software, and an antenna capable of communicating using any suitable communications scheme.

The mobile payment application 16 is an application providing payment capabilities implemented within the mobile device 10. For example, the payment application 16 is preferably installed in the secure element 15. The mobile payment application 16 provides the functionality to manage and maintain the user's payment information and support mobile payments. During a payment transaction, the mobile payment application 16 may interact with a payment terminal such as a contactless POS terminal over the contactless interface to enable the mobile payment transaction. The mobile payment application 16 may also support other modes of mobile payments, such as e-commerce, using the mobile communication device. In an embodiment, the entity issuing the mobile payment application is the issuer 12.

The mobile payment application 16 also interfaces with a user interface 17 for user interaction (e.g., to enter and view information). The user interface 17 also, communicates with the mobile payment application 16 to retrieve and return information during the processing of any of a number of services offered to the user via the mobile device 10 (e.g., issuer update processing). Additionally, the user interface 17 may communicate with the gateway 11 to transfer OTA messages, e.g. if the mobile payment application 16 does not send and receive OTA messages directly.

The secure element 15 is used by the mobile device 10 to host and store data and applications that require a high degree of security. The secure element 15 is provided to the mobile device 10 by a secure element issuer. The secure element issuer may not necessarily be a member of the payment process or the same entity as the issuer 12 of the payment application. For example, the secure element issuer may be a mobile network operator (MNO) or the manufacturer of the mobile device 10.

The mobile device 10 may be in any suitable form for contactless payment device. For example, suitable mobile communication devices 10 can be hand-held and compact so that they can fit into a user's wallet and/or pocket (e.g., pocket-sized). The mobile device 10 typically comprises a processor, a memory, input device, output devices, and near-field communication (NFC) devices, all of which are operatively coupled to the processor. Specific examples of mobile communication devices 10 can include cellular or wireless phones, tablets, smartphones, personal digital assistances (PDAs), pagers, portable computers, and the like. Although a mobile communication device 10 is referred to in the present application, embodiments of the present invention could be implemented with a number of different mobile user devices capable of communicating with the entities described herein.

The mobile device 10 may be capable of communicating with the gateway 11 through one or more antennas using over-the-air (OTA) communications. Additionally, the mobile device 10 may be capable of communicating with an payment terminal (e.g. a contactless POS terminal) that may typically be located at a merchant using contactless communications hardware.

The gateway 11 can be a server computer or a series of server computers that are configured to communicate with mobile communication devices using over-the-air (OTA) messages. The gateway 11 allows mobile devices to access services, such as, e.g., issuer updates, from the issuer 12 of the mobile payment application via a processing network 13. Gateway 11 may be implemented by issuers, acquirers, third-party services providers, or trusted service managers.

Well known secure communication can be established between the processing network 13 and the gateway 11. This secure communication can be established with a mutually-authenticated secure sockets layer (SSL) channel. This secure communication may use data encryption standards such as, e.g., RSA with a key of at least 1024 bits, triple data encryption standard (DES), 128- bit advanced encryption standard (AES), an RC4 stream encryption algorithm using minimum 128-bit key length, etc. These encryption standards may be used to create the secure session. Any other suitable form of secured communication between the processing network 13 and the gateway 11 may be implemented as one of ordinary skill would recognize.

The issuer 12 communicates with the mobile payment application via the mobile device 10 using the gateway 11. The issuer 12 can communicate with the gateway 11 through the secured processing network 13.

In another embodiment, the connection between the gateway 11 and the issuer 12 is direct. The direct communication between the gateway 11 and the issuer 12 can be secured in the same way described above.

The issuer updates may include information for configuring the mobile payment application as well as information for issuer updates to the mobile payment application. The issuer updates may include card parameter updates, blocking or unblocking of the mobile payment application, disabling the payment ability of a mobile payment application and unblocking or changing a PIN used to authenticate the identity of the user and/or the mobile communication device. Additionally, the issuer updates may include the delivery and request of value-added services provided by the mobile payment application issuer including inquiries about balances of accounts corresponding to mobile payment applications, as well as adding, limiting, or other instructions regarding pre-paid amounts associated with mobile payment applications.

As used herein, the term "issuer" encompasses any entity that issues and maintains a financial account (e.g., credit, debit, or prepaid) and a mobile payment application associated with the financial account. Alternatively, the issuer 12 may not issue the mobile payment application directly and instead may contract with another party to issue the mobile payment application. The issuer 12 can communicate with the gateway11 regarding information related to the account associated with the mobile payment application 16.

FIG.2 illustrates an exemplary flow diagram for personalizing the mobile payment application 16 on the mobile communication device 10. During this personalization process, at step 20, a first gateway master key GMK₁ and a second gateway master key GMK₂ are created. These gateway master keys GMK₁ and GMK₂ are generated by the issuer 12 or by any trusted system. At step 21, the issuer 12 shares the generated gateway master keys GMK₁ and GMK₂ with the gateway 11. At the same time, at step 22, the issuer shares these gateway master keys GMK₁ and GMK₂ with a key management system 14. The gateway master keys GMK₁ and GMK₂ can be different or the same. This choice can depend on the level of security to be reached.

The key management system 14 as illustrated in FIG. 2 is a software program executing in a computer. The logical functions of the software and the database may be distributed among computers in a client/server network or centralized into a single processor. The functions may also be distributed across processors connected through standard local area networks, wide area networks, dedicated phone lines or other communication means used to loosely couple processors.

The key management system 14 receives the gateway master keys GMK₁ and GMK₂ from the issuer 12 or its trusted system. The key management system 14 generates, at step 23, an identifier. This identifier is an application identifier Al. This identifier is preferably unique at each mobile payment application 16. This identifier may be a PAN alias or an alias of the PAN and its PSN (Primary Account Number Sequence Number) associated. This identifier can be generated from at least the alias of the PAN. At step 24, the application identifier Al is loaded into the mobile payment application.

At step 25, the key management system derives a gateway encryption key KENC from a first derivation algorithm, the received first gateway master key GMK₁ and the application identifier Al. The key management system derives also a gateway integrity key KMAC from a second derivation algorithm, the received second gateway master key GMK₂ and the application identifier Al. The first and the second derivation algorithm used herein are well known by the person in the art and do not need to be described any more. The first and the second derivation algorithms can be different or the same. This choice can depend on the level of security to be reached.

In an embodiment, for a strong protection of the data transmitted, the gateway master keys GMK₁ and GMK₂ are identical and the first and second derivation algorithms are different and vice versa.

At step 26, the key management system can load the gateway encryption key KENC and the gateway integrity key KMAC in its assigned location into the secure element 15, for use when the payment application 16 becomes operational. In a preferred embodiment, the gateway encryption key KENC and the gateway integrity key KMAC are loaded into the mobile application 16. So, the key management system 14 creates static derived keys for the mobile payment application 16 which must in turn be used to create session keys for communicating with the gateway 11.

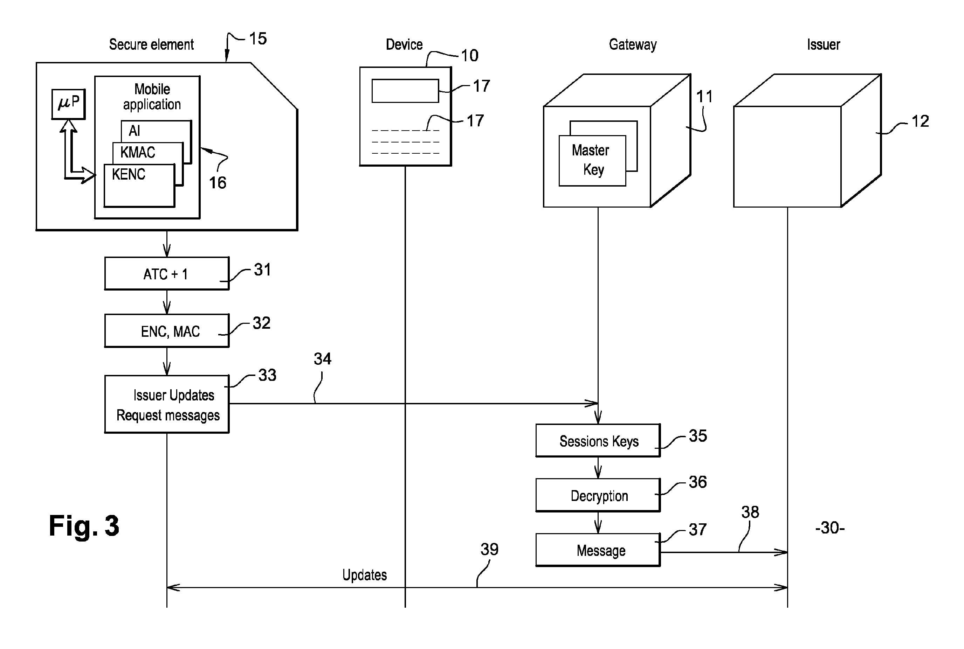

FIG. 3 illustrates an exemplary transaction flow diagram 30 for configuring or updating the mobile payment application 16 on the mobile device 10. This transaction flow may be initiated with or without a users' action based on the issuer's requirements.

Indeed, the transaction flow 30 can be initiated via either a "pull" or a "push" situation. In a "pull" situation, the transaction flow 30 is initiated by the user via interaction with the mobile payment application 16 or by the mobile device itself. The pull situation may be triggered by a specific payment application status (e.g., when offline risk management parameters have reached certain thresholds, when a requirement to unblock the PIN is identified). In a "push" situation, the issuer or its trusted system initiates the transaction flow 30 by sending a push message to the mobile device 10.

The issuer updates can further include, but are not limited to, card parameter updates, blocking or unblocking the mobile payment application, disabling payment ability, unblocking or changing the PIN for the mobile payment application, etc.

When the transaction flow 30 is initiated, the mobile payment application 16 increments a transaction counter, at step 31. In the embodiment illustrated herein, the transaction counter can be an Application Transaction Counter ATC. At step 32, the mobile payment application 16 derives a session encryption key ENC from the stored gateway encryption key KENC and the current ATC. The mobile payment application 16 derives also a session integrity key MAC from the stored gateway integrity key KMAC and the current ATC. Since the ATC is different for every transaction the resulting session keys will be different, avoiding replay attacks.

The session keys are used to protect the confidentiality and integrity of the messages exchanged between the mobile payment application 16 and the gateway 11.

At step 33, an issuer update request message is built by the mobile payment application 16 with "chip data". This issuer update request message comprises the current ATC, the amount authorized, the transaction date, the transaction currency code, the application identifier Al... This issuer update request comprises also an enciphered value and a MAC value.

The enciphered value is the result of the encryption of sensitive user credentials data with the session encryption key ENC. The sensitive user credentials data comprises but is not limited to the contents of the magnetic-stripe data tracks (track 1, track 2, ...). In a preferred embodiment, the sensitive user credentials data can be the Primary Account Number PAN and/or the track 2 equivalent data.

The MAC signature value is the result of a MAC (Message Authentication Code) operation on at least one part over the content of the issuer update request message. In an embodiment, the MAC operation is applied on the issuer updates request message except the application identifier Al. The MAC operation uses the session key MAC and a cryptographic checksum algorithm to produce the MAC signature value which later can be used to ensure the data has not been modified.

At step 34, the gateway 11 receives from the mobile device the issuer updates request message. At step 35, the gateway computes the session encryption key ENC and the session integrity key MAC. For that, the gateway derives the gateway encryption key KENC from the stored first gateway master key GMK₁ and the application identifier Al extracted from the received issuer updates request message. The gateway 11 derives also a gateway integrity key KMAC from the stored second gateway master key GMK₂ and the received application identifier Al. The gateway 11 derives the session encryption key ENC from the computed gateway encryption key KENC and the current ATC extracted from the received issuer updates request message. The gateway derives the session integrity key MAC from the computed gateway integrity key KMAC and the received current ATC.

At step 36, the gateway computes a MAC value from the received issuer updates request message and the computed session integrity key MAC. The computed MAC value is compared to the received MAC value to check if the issuer updates request message has been altered. In an embodiment, if the verification of the MAC value fails, the process flow can be closed and the gateway may notify the mobile payment application 16 and/or the issuer 12 that the MAC value is tampered. If on the other hand the MAC value is successfully verified, the gateway 11 may decrypt the encrypted value of the issuer updates request message with the session key ENC.

The session encryption key ENC and the session integrity key MAC such as defined by the present invention provide a one-way secure channel over which information can be transmitted securely through the mobile device 10 and over the mobile network and/or Internet. The session keys ENC and MAC allow establishing a secure session between the mobile payment application and the gateway 11 in order to request update from the issuer 12.

At step 37, the gateway 11 builds a message, from the received data from issuer updates request and the decrypted sensitive user credentials data, to be sent to the issuer 12. At step 38, the built message is sent to the issuer.

At step 39, after the issuer 12 receives the message and processes it, the issuer 12 sends an update response message back to the gateway 11. The gateway 11 then forwards the response message back to the mobile payment application. If needed, the response message can be encrypted with the session key ENC and a MAC signature value computed with the session key MAC can be added to the response message.

The gateway 11 allows mobile device 10 to access services from the issuer 12, such as, e.g., issuer updates.

With the present invention sensitive user credentials are not transmitted in clear to the user interface 17, and they do not circulate in clear during the OTA transfer from the mobile device 10 to the gateway 11.

The invention is simple and easy to implement, and does not require additional OTA exchanges with the Gateway to establish the Secure Channel. A mutual authentication between the payment application and the gateway is not needed to ensure the confidentiality of user credentials and the integrity/origin of the message.

## Claims

1. A method for securing transaction messages transiting between a mobile application in a mobile device and a gateway wherein when a transaction is initiated:
- incrementing a transaction counter of the mobile application,
- deriving a session encryption key ENC from the transaction counter value and a gateway encryption key KENC, said gateway encryption key being derived from a first master gateway key,
- encrypting sensitive data with the session encryption key ENC,
- elaborating a transaction request message comprising the encrypted sensitive data, the transaction counter value, and an application identifier of the mobile application,
- sending the transaction request message from the mobile application through the mobile device to the gateway, the gateway being configured to compute the session encryption key from the received transaction request message, and
- decrypting the received encrypted data with the computed session encryption key ENC.

2. The method according to the previous claim, wherein it comprises the following steps:
- deriving a session integrity key MAC from the transaction counter value and a gateway integrity key KMAC, said gateway integrity key being derived from a second master gateway key,
- computing a MAC signature value from the session integrity key MAC and at least one part of the contents of the transaction request message,
- adding said MAC value to the transaction request message during its elaboration,
- the gateway being configured to compute the session integrity key from the received transaction request message and to verify the MAC signature value of the received transaction request message.

3. The method according to the previous claim, wherein the derivation of the gateway encryption key KENC and the gateway integrity key KMAC comprises the following steps:
- generation of the first and second master gateway keys,
- generation of the application identifier for the mobile application,
- deriving the gateway encryption key KENC from said application identifier, the first master key and a first derivation algorithm,
- deriving the gateway integrity key KMAC from said application identifier, the second master key and a second derivation algorithm,
- loading into the mobile application the generated application identifier, the derived gateway encryption key KENC and the derived gateway integrity key KMAC.

4. The method according to any previous claims, wherein the gateway computes the session keys according to the following steps:
- deriving the gateway encryption key KENC and the gateway integrity key KMAC from the received application identifier and respectively from a stored first and second master gateway key and the first and second derivation algorithm,
- deriving the session encryption key ENC and the session integrity key MAC from the received transaction counter value and respectively from the derived gateway encryption key KENC and the derived gateway integrity key KMAC.

5. The method according to any claim 3 or 4, wherein the first and the second derivation algorithm are identical.

6. The method according to claim 2 to 5, wherein the first and the second master gateway key are identical.

7. The method according to any previous claims, wherein the mobile application, comprising the generated application identifier, the gateway encryption key KENC and the gateway integrity key KMAC, is stored into a secure element of the mobile device.

8. The method according to any previous claim, wherein the gateway forwards the transaction request message comprising the decrypted sensitive data to an issuer of the mobile application for processing.

9. The method according to any previous claim, wherein the transaction is initiated by a user of the mobile device, by the mobile device itself, or when a push message is received by the mobile application.

10. The method according to any previous claims, wherein the mobile application is a mobile payment application, the transaction counter is an Application Transaction Counter (ATC) and wherein the transaction request message comprises:
- the application identifier,
- the current Application Transaction Counter ATC,
- the sensitive data comprising the contents of the magnetic-stripe data track(s), fully or partially (track 1, track 2, track 3),
- dynamic transaction data and static application data enabling the issuer to authenticate the mobile payment application.

11. The method according to the previous claim, wherein the transaction initiated is an over-the-air issuer update comprising:
- updating parameters for the mobile payment application,
- blocking a payment application on the mobile device,
- unblocking the mobile payment application,
- unblocking a PIN on the mobile payment application, and/or
- changing the PIN on the mobile payment application.

12. The method according to any claims 1 to 10, wherein the transaction initiated is an authentication of the mobile communication device by the issuer.

13. The method according to any claims 1 to 10, wherein the transaction initiated is a payment transaction through the mobile communication device.

14. The method according to any previous claims, wherein the gateway communicates with the issuer through a secured processing network.

15. A transaction processing system, comprising a mobile application stored into a mobile device, said mobile application being configured to communicate with an issuer via the mobile communication device across a gateway, wherein transaction messages transiting between the mobile application and the gateway during this communication are secured according to any previous claims.
